# EUROPÄISCHE PATENTSCHRIFT

(11) **EP 2 454 531 B1**
(45) Veröffentlichungstag und Bekanntmachung des Hinweises auf die Patenterteilung: **27.08.2014**
(21) Anmeldenummer: 10735184.3
(22) Anmeldetag: 16.06.2010
(51) Int. Cl.: F24D 3/10, G05D 7/01, F24D 19/10

(54) **VOREINSTELLBARER DURCHFLUSSMENGENREGLER FÜR HEIZUNGSANLAGEN**
PRE-ADJUSTABLE FLOW-RATE CONTROLLER FOR HEATING SYSTEMS
RÉGULATEUR DE DÉBIT PRÉRÉGLABLE POUR INSTALLATION DE CHAUFFAGE

(30) Priorität: 16.07.2009 DE 102009033376
(43) Veröffentlichungstag der Anmeldung: 23.05.2012
(73) Patentinhaber: THEODOR HEIMEIER METALLWERK GMBH, 59592 Erwitte (DE)
(72) Erfinder: HENKE, Bernhard, 59929 Brilon (DE); FUHRMANN, Jürgen, 59510 Lippetal (DE); SCHMIDT, Carina, 59602 Rüthen (DE)
(86) Internationale Anmeldenummer: PCT/EP2010/003365
(87) Internationale Veröffentlichungsnummer: WO 2011/006559

(56) Entgegenhaltungen:
- EP-A2- 0 699 985
- DE-A1- 3 213 568
- US-B2- 6 688 319

## Beschreibung

Die Erfindung betrifft einen voreinstellbaren Durchflussmengenregler für Heizungsanlagen nach dem Oberbegriff des Anspruchs 1.

Ein derartiger Durchflussmengenregler für Heizungsanlagen ist aus der US 6688319 B2 bekannt. Dieser bekannte voreinstellbare Durchflussmengenregler weist einen Reguliereinsatz auf, bei dem eine Drosselöffnung, gebildet aus einer Regelhülse und einem Regulierstopfen, gesteuert durch den Differenzdruck, gebildet aus dem Eingangsdruck am Heizmediumzulaufstutzen und dem Ausgangsdruck, gebildet am Heizmediumablaufstutzen, verstellt wird. Die Steuerung der Drosselöffnung erfolgt dabei durch eine Regelhülse, die differenzdruckabhänigig in einem Topf axial verlagert wird.

Durch die besondere Form von Ausnehmungen an dem Regulierstopfen und durch das Eintauchen der Regelhülse in den Regulierstopfen erfolgt eine strömungsgeschwindigkeitsabhängige Korrektur der Durchflussmengenregelung. Der hierbei ausgenutzte Bernoullieffekt wirkt dem Differenzdruckeffekt hierbei entgegen. Die Voreinstellung der Durchflussmengen erfolgt durch einen Voreinstellstopfen, der abhängig von seiner axialen Position den Durchflussquerschnitt durch eine Öffnung eines Topfbodens des Topfes verändert.

Diese Voreinstellung der Durchflussmenge ist jedoch vergleichsweise ungenau, weil bereits geringe axiale Verlagerungen des Voreinstellstopfens große Änderungen des Durchflussquerschnittes bewirken. Eine feinfühlige und damit entsprechend genaue Voreinstellung der Durchflussmenge ist mit dieser bekannten Lösung nicht möglich.

Darüber hinaus ist auch die eigentliche Durchflussmengenregelung bei voreingestellter Durchflussmenge ungenau, weil nur sehr geringe Druckunterschiede in dem Mengenreguliereinsatz zur Regelung der Durchflussmenge zur Verfügung stehen und weil die in dem vorbekannten Durchflussmengenregler verwendeten Dichtungen vergleichsweise viel Reibung zwischen der Regelhülse und dem Topf erzeugen. Dadurch ergeben sich einerseits hohe Losbrechmomente, um überhaupt eine Veränderung der axialen Lage der Regelhülse gegenüber dem Topf zu bewirken. Andererseits ist die Verschiebung der Regelhülse im Topf auch bei deren Bewegung relativ schwergängig.

Die EP 0 699 985 A2 und die DE 32 13 568 A1 zeigen Regler mit konusförmigen Ventilelementen. Die Voreinstellung der Durchflussmenge ist jedoch starr und erfolgt nicht im Sinne einer druckabhängigen Regelung.

Die Erfindung hat die Aufgabe einen voreinstellbaren Durchflussmengenregler für Heizungsanlagen zu schaffen, der eine feinfühlige und entsprechend genaue Voreinstellung der gewünschten Durchflussmenge ermöglicht.

Diese Aufgabe wird erfindungsgemäß dadurch gelöst, dass der Mengenreguliereinsatz ablaufstutzenseitig einen Kegel aufweist, der mit einem Hohlkegel zusammen wirkt, wobei der Kegel und der Hohlkegel einen Ringraum für das ablaufende Heizmedium bilden, dass der Hohlkegel mit der Regelhülse verbunden ist und dass der Kegel die Öffnung des Topfbodens durchdringt.

Durch den erfindungsgemäß vorgesehenen Kegel und Hohlkegel wird ein Ringraum gebildet, der bei vergleichsweise großen axialen Verlagerungen des Hohlkegels gegenüber dem Kegel nur eine geringfügige Veränderung des Querschnittes des Ringraumes bewirkt. So kann ein gegenüber dem Vorbekannten deutlich vergrößerter axialer Verstellweg vorgesehen werden, um die gewünschte Voreinstellung darzustellen. Der Verstellweg kann hierbei durchaus mehrere Millimeter bis hin zu einem Zentimeter betragen, wobei jedoch der voreingestellte Durchflussquerschnitt in dem Ringraum sich nur um wenige Quadratmillimeter verändert.

Mit diesen Maßnahmen wird also eine Art Übersetzung zwischen dem Verschiebeweg des Hohlkegels gegenüber dem Kegel und der Veränderung der wirksamen Fläche im Ringraum geschaffen, so dass große Hübe des Hohlkegels gegenüber dem Kegel nur zu geringen Änderungen des Durchflussquerschnittes im Ringraum führen. Dies ermöglicht eine gegenüber dem Vorbekannten deutlich feinfühligere und genauere Voreinstellung der gewünschten Durchflussmenge.

Durch die Verbindung des Hohlkegels mit der Regelhülse erfolgt dabei die eigentliche Regelung der Durchflussmenge. Die bei der vorbekannten Lösung gemäß der US 6688319 B2 detailliert beschriebene Funktionsweise ist bei der Lösung der vorliegenden Erfindung identisch.

Es wird also mit einfachen konstruktiven Maßnahmen eine gegenüber dem Stand der Technik deutlich bessere Voreinstellung des Durchflussmengenreglers erzielt. Der hierfür erforderliche Mehraufwand hält sich in engen Grenzen. Die erfindungsgemäße Lösung kann; wie auch die vorbekannte Lösung; mit einfachen und kostengünstigen Mitteln produziert werden.

Vorteilhafte Ausgestaltungen und Weiterbildungen der Erfindung ergeben sich aus den Unteransprüchen und werden im Folgenden anhand der Unteransprüche näher beschrieben.

Zur Reduzierung der Reibung und des Losbrechmomentes zwischen der Regelhülse und dem Topf des Mengenreguliereinsatzes ist es besonders vorteilhaft, wenn zwischen dem Topf und der Regelhülse mindestens eine Labyrinthdichtung angeordnet ist. Die geringen Druckunterschiede in dem Reguliereinsatz, die in der Größenordnung von etwa 100 mbar liegen, erfordern die Verwendung einer Axialfeder mit gerade einmal 1 Newton Rückstellkraft. Dichtungsanordnungen, die, wie bei der vorbekannten Lösung dargestellt, führen letztlich zu Reibungen zwischen den sich gegeneinander bewegenden Teilen und verursachen nahezu unüberwindbare Schwierigkeiten. Um hier den Arbeitspunkt des voreinstellbaren Durchflussmengenreglers in Richtung hin zu kleineren Differenzdrücken und damit letztlich hin zu kleineren Durchflussmengenänderungen zu verschieben, ist es besonders vorteilhaft Labyrinthdichtungen vorzusehen.

Um ein Verkippen der Regelhülse gegenüber dem Topf zu vermeiden, ist es besonders vorteilhaft in diesem Zusammenhang zwei Labyrinthdichtungen vorzusehen, wobei eine Labyrinthdichtung am Außenumfang des Hohlkegels befestigt ist und die andere Labyrinthdichtung am Innenumfang des Regulierstopfens befestigt ist. Weiterhin besonders vorteilhaft kann die Labyrinthdichtung aus mindestens zwei Dichtringen bestehen, deren Dimensionierung gerade so gewählt ist, dass sich ein geringer Spalt zwischen Dichtring und Dichtfläche ergibt und damit die Dichtringe gerade nicht auf der Dichtfläche aufliegen und Reibung erzeugen können.

Als besonders vorteilhaft hat es sich erwiesen, die Labyrinthdichtung aus 3 Dichtringen aufzubauen. Bei der Materialwahl für die Dichtringe hat sich Polytetrafluorethylen (PTFE) als besonders geeignet herausgestellt. Zur weiteren Reduzierung evtl. Reibungseffekte hat es sich als besonders vorteilhaft erwiesen, wenn die Dichtringe dichtflächenseitig einen umlaufenden Vorsprung mit im Wesentlichen halbrundem Querschnitt aufweisen.

Eine weitere Reduzierung der Reibung zwischen der Regelhülse und dem Topf kann bei Verwendung der genannten Labyrinthdichtung dadurch erzielt werden, dass die Regelhülse und der Topf aus Edelstahl insbesondere aus VA 1.4303 bestehen. Dieses Material weist einerseits eine besonders geringe Oberflächenrauhigkeit auf. Andererseits ist dieses Material sehr formstabil und durch übliche Pressverfahren auch in vergleichsweise komplizierte Formgebungen zu pressen. Schließlich kann in diesem Zusammenhang zusätzlich die Regelhülse und/oder der Topf mit einer gleitfähigkeitserhöhenden Beschichtung insbesondere aus Teflon (Tetrafluorethylen) versehen werden. Die Materialpaarung Teflon/PTFE weist hierbei besonders gute Gleiteigenschaften auf.

Zur Erzeugung einer nicht linearen Voreinstellkennlinie ist es besonders vorteilhaft, wenn der Hohlkegel in Axialrichtung eine nicht lineare Öffnung aufweist. Dies bedeutet im Ergebnis, dass eine entsprechend axiale Verlagerung des Hohlkegels gegenüber dem Kegel zu einer nicht linearen Veränderung des Durchflussquerschnittes des Ringraumes führt. Hiermit kann insbesondere bei sehr kleinen voreinzustellenden Durchflussmengen eine sehr genaue Voreinstellung gewährleistet werden.

Die Ausnehmungen des Regulierstopfens können besonders vorteilhaft in Axialrichtung eine parabelförmige Öffnung aufweisen. Hiermit wird die eigentliche Regelkennlinie des voreinstellbaren Durchflussmengenreglers linearisiert. Empirische Anpassungen der Kontur der Ausnehmungen sind darüber hinaus ebenfalls möglich, um Besonderheiten des Strömungsverhaltens im voreinstellbaren Durchflussmengenregler berücksichtigen zu können.

Der voreinstellbare Durchflussregler kann besonders vorteilhaft Teil eines vorlaufseitigen Heizkreisverteilers für Fußbodenheizungen sein. Dabei wird zur Voreinstellung der Durchflussmenge der Regulierstopfen an einer in einem Oberteil gelagerten Spindel befestigt, deren axiale Lage durch Verdrehen einer Handradkappe, die als Handhabe zur Voreinstellung der Durchflussmenge wirkt, veränderlich ist. Gemeinsam mit dem Regulierstopfen wird dabei auch der Hohlkegel entsprechend axial verlagert, um so den Durchflussquerschnitt des Ringraumes zu verändern. Der mit dem Hohlkegel zusammenwirkende Kegel ist dabei ortsfest im Heizmediumablaufstutzen angeordnet.

Bei Verwendung des voreinstellbaren Durchflussmengenreglers in einem vorlaufseitigen Heizkreisverteiler für Fußbodenheizungen kann das Gehäuse eine Drehstellungsanzeige für die Handradkappe aufweisen, so dass jeder Zeit der voreingestellte Durchflussmengenwert ablesbar ist. Um eine ungewollte Verstellung der voreingestellten Durchflussmenge zu vermeiden, kann die Handradkappe einen axial verschieblichen Blockierring aufweisen.

Besonders vorteilhaft kann der voreinstellbare Durchflussmengenregler auch Teil eines Heizkörperventiles sein, dessen Ventilkörper mit einem Ventilsitz zusammenwirkt, der als Bohrung eines Trägers für den Kegel ausgebildet ist. Mit diesen Maßnahmen ist dem Mengenreguliereinsatz quasi ein normales Heizkörperventil in Strömungsrichtung nachgeschaltet, das beispielsweise durch einen Thermostatventilkopf betätigbar ist.

In diesem Zusammenhang kann die Voreinstellung der Durchflussmenge besonders vorteilhaft durch einen Betätigungsring am Ventilanschlussstutzen erfolgen, der zugleich Voreinstellstutzen ist. Der Betätigungsring verschiebt über eine Gewindehülse bei dessen Verdrehung einen mit einem Gewinde versehenen Regelventileinsatz axial. Der Regelventileinsatz trägt dabei den Ventilsitz gemeinsam mit dem Träger für den Kegel. Der Topf, in dem die Regelhülse angeordnet ist, ist dem gegenüber axial ortsfest mit der Gewindehülse verbunden. D. h., bei dieser Ausführungsform wird der Kegel gegenüber dem Hohlkegel zur Voreinstellung der Durchflussmenge axial verlagert. Im Ergebnis wird damit wieder der Durchflussquerschnitt im Ringraum zwischen dem Kegel und dem Hohlkegel im Sinne der gewünschten Voreinstellung verändert.

Bei Verwendung des voreinstellbaren Durchflussmengenreglers als Teil eines Heizkörperventiles kann der Betätigungsring als Handhabe zur Voreinstellung der Durchflussmenge axial verschieblich zur Blockierung der Drehung ausgebildet sein. Da die Veränderung der Voreinstellung für die Durchflussmenge insbesondere dann nicht gewünscht ist, wenn der Thermostatkopf auf dem Ventilanschlussstutzen montiert ist, ist es besonders vorteilhaft, wenn in diesem Zusammenhang die axiale Höhe des Betätigungsringes so bemessen ist, dass der Betätigungsring bei montiertem Thermostatkopf blockiert ist.

Ausführungsbeispiele des voreinstellbaren Durchflussmengenreglers für Heizungsanlagen sind in den Zeichnungen dargestellt und werden im Folgenden anhand der Zeichnungen näher erläutert.

Es zeigen
- Fig. 1: 4 voreinstellbare Durchflussmengenregler als Teil eines vorlaufseitigen Heizkreisverteilers für Fußbodenheizungen in der grundsätzlichen Anordnung,
- Fig. 2: einen der voreinstellbaren Durchflussmengenregler gemäß Fig. 1 in einem Axialschnitt,
- Fig. 3: ein Detail des voreinstellbaren Durchflussmengenreglers gemäß 2,
- Fig. 4: einen voreinstellbaren Durchflussmengenregler als Teil eines Heizkörperventiles in einem Axialschnitt und
- Fig. 5: ein Detail des voreinstellbaren Durchflussmengenreglers gemäß Fig. 4.

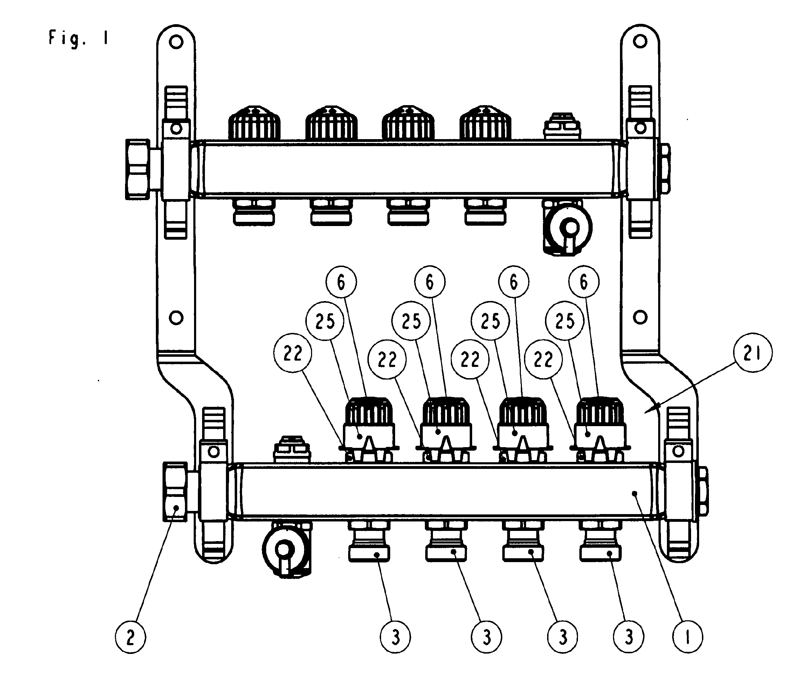

In der Fig. 1 ist eine Heizkreisverteileranordnung für Fußbodenheizungen dargestellt, die aus einem rücklaufseitigen Heizkreisverteiler für Fußbodenheizungen in der Fig. 1 oben und aus einem vorlaufseitigem Heizkreisverteiler für Fußbodenheizungen (21) in der Fig. 1 unten besteht. Dieser vorlaufseitige Heizkreisverteiler (21) für Fußbodenheizungen weist ein Gehäuse (1) auf, welches einen Heizmediumzulaufstutzen (2) aufweist. Weiterhin weist das Gehäuse (1) Heizmediumablaufstutzen (3) für die verschiedenen Fußbodenheizkreise und Voreinstellstutzen (4) auf, die Handhaben (6) zur Voreinstellung der Durchflussmenge für die einzelnen Fußbodenheizkreise tragen.

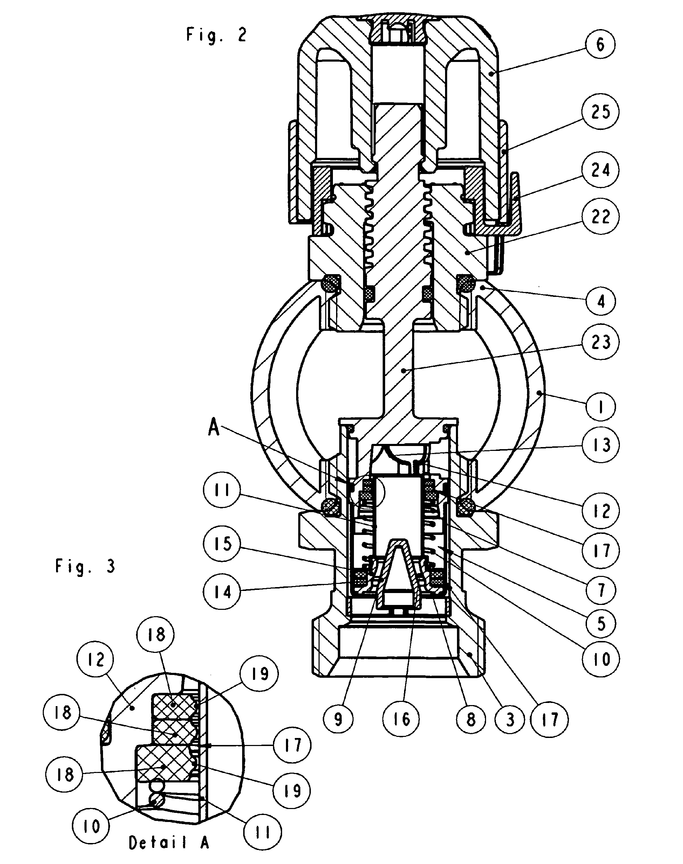

In der Fig. 2, in der identische oder funktionsähnliche Einrichtungsteile wie in der Fig. 1 mit denselben Bezugszeichen gekennzeichnet sind, wird nun einer der voreinstellbaren Durchflussmengenregler gemäß der Fig. 1 im Schnitt dargestellt und näher beschrieben. Aus der Fig. 2 wird ersichtlich, dass innerhalb der Gehäuses (1) des voreinstellbaren Durchflussmengenreglers ein Mengenreguliereinsatz (5) vorgesehen ist, der einen Topf (7), mit einem Topfboden (8), mit einer Öffnung (9) im Topfboden (8) aufweist. In diesem Topf (7) ist axial verschieblich eine Regelhülse (11) angeordnet, die durch eine Axialfeder (10) in Richtung auf den Topfboden (8) federbelastet ist. Das in der Fig. 2 obere Ende der Regelhülse (11) wirkt dabei mit einem Regulierstopfen (12) zusammen, in den die Regelhülse (11) eintauchen kann und damit verschiedene Ausnehmungen (13) des Regulierstopfens (12) mit parabelförmigen Querschnitt jeweils abschnittsweise überdeckt.

In der Fig. 2 unten ist an der Regelhülse (11) und mit dieser Regelhülse (11) gemeinsam verschieblich ein Hohlkegel (15) befestigt, in den ein Kegel (14) eintaucht. Der Kegel (14) ist dabei ortsfest im Heizmediumablaufstutzen (3) des voreinstellbaren Durchflussmengenreglers angeordnet. Zwischen dem Kegel (14) und dem Hohlkegel (15) ist ein Ringraum (16) gebildet, der abhängig von der axialen Lage des Hohlkegels (15) gegenüber dem Kegel (14) einen Durchflussquerschnitt für das Heizmedium bestimmt.

Das Heizmedium fließt dabei an einer Spindel (23) vorbei, durch die Ausnehmungen (13) des Regulierstopfens (12) in die Regelhülse (11) hinein und durch den Ringraum (16) zwischen dem Kegel (14) und dem Hohlkegel (15) hindurch durch den Heizmediumablaufstutzen (3) in den jeweiligen Heizkreis der Fußbodenheizung. Die Größe des Durchflussquerschnittes durch dem Ringraum (16) wird dabei einerseits durch den Druck im Inneren der Regelhülse (11) bestimmt, welche den Hohlkegel (15) gegen die Kraft der Axialfeder (10) gegenüber dem Kegel (14) verlagert.

Andererseits wird die Größe des Durchflussquerschnittes im Ringraum (16) durch die jeweilige Voreinstellung bestimmt, die sich durch axiale Verlagerung der Spindel (23) und damit des Topfes (7) gemeinsam mit der Regelhülse (11) und damit des Hohlkegels (15) gegenüber dem Kegel (14) ergibt. Die axiale Verlagerung der Spindel (23) erfolgt dabei durch eine Handradkappe (6), die als Handhabe zur Voreinstellung der Durchflussmenge wirkt und durch ein Oberteil (22) mit einem Gewinde zwischen dem Oberteil (22) und der Spindel (23). Zur Ablesung der voreingestellten Durchflussmenge dient eine Drehstellungsanzeige (24), die die Drehstellung der Handradkappe (6) gegenüber der Drehstellungsanzeige darstellt. Die Drehung der Handradkappe (6) kann durch einen Blockierring (25) blockiert werden.

In der Fig. 3 sind gleiche oder gleich wirkende Einrichtungsteile mit denselben Bezugszeichen wie in der Fig. 2 dargestellt. Hier wird an einem Detail der Aufbau zweier Labyrinthdichtungen (17) in der Fig. 2 näher erläutert. Diese Labyrinthdichtungen (17) in der Fig. 2 dienen letztlich zur Abdichtung der Regelhülse (11) gegenüber dem Topf (7).

Diese Labyrinthdichtungen (17) sind wie aus der Fig. 3 ersichtlich aus jeweils drei Dichtringen (18) aus PTFE aufgebaut. Diese Dichtringe (18) weisen jeweils in Richtung der Dichtfläche einen umlaufenden Vorsprung (19) auf. Die Dichtfläche ist bei dem dargestellten Detail die Regelhülse (11). Die Labyrinthdichtung (17) selbst ist an dem Regulierstopfen (12) angeordnet.

Wesentlich bei der vorliegenden Labyrinthdichtungsanordnung ist, dass die Dimensionierung der einzelnen Dichtringe (18) der Labyrinthdichtung (17) so gewählt ist, dass sich jeweils ein geringer Spalt zwischen den Dichtringen (18) und der Dichtfläche, hier der Regelhülse (11), ergibt, so dass die Dichtung nahezu reibungsfrei erfolgt. Dies verbessert grundlegend das Ansprechen auf Durchflussmengenänderung und damit Druckänderungen und reduziert sowohl die Reibung an der Dichtfläche als auch das Losbrechmoment zur Verlagerung der Regelhülse (11) gegenüber dem Topf (7).

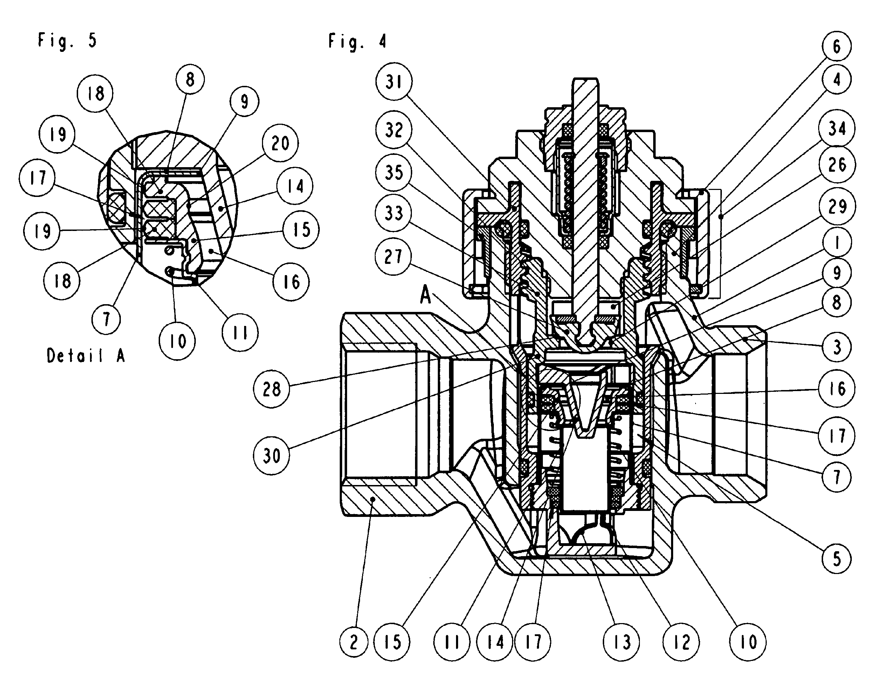

In der Fig. 4 sind gleiche oder gleich wirkende Einrichtungsteile wie in der Fig. 2 bzw. Fig. 3 mit denselben Bezugszeichen versehen. In dieser Fig. 4 wird nun die Verwendung des voreinstellbaren Durchflussmengenreglers in einem Heizkörperventil, das in einem Axialschnitt dargestellt ist beschrieben. Das Heizkörperventil (26) weist dabei in bekannter Art und Weise einen Ventilkörper (27) auf, der mit einem Ventilsitz (28) zusammen wirkt. Der Ventilsitz (28) ist dabei als Bohrung (29) eines Trägers (30) für den Kegel (14) ausgebildet. D. h., das eigentliche Heizkörperventil ist in Strömungsrichtung dem voreinstellbaren Durchflussmengenregler nachgeschaltet.

Die Voreinstellung der Durchflussmenge erfolgt bei dieser Anordnung jedoch nicht durch axiale Verlagerung des Topfes (7) mit der Regelhülse (11) und damit dem Hohlkegel (15) gegenüber einem ortsfesten Kegel (14), wie in der Fig. 2 dargestellt, sondern durch Verlagerung des Kegels (14) in axialer Richtung gegenüber dem Hohlkegel (15).

Diese axiale Verlagerung des Kegels (14) gegenüber dem Topf (7) der Regelhülse (11) und dem Hohlkegel (15) erfolgt dabei durch Verdrehen einer Gewindehülse (31) mittels eines Betätigungsringes (6), der als Handhabe zur Voreinstellung der Durchflussmenge wirkt. Diese Gewindehülse (31) ist über ein Gewinde (32) mit einem Regelventileinsatz (33) verbunden, wobei die Gewindehülse (31) ortsfest, der Regelventileinsatz (33) jedoch durch Verdrehung axial verschieblich ist.

Mit Axialverschiebung des Regelventileinsatzes (33), der auch den Ventilkörper (27) des Heizkörperventiles (26) trägt, wird auch der Träger (30) für den Kegel (14) und damit der Kegel (14) selbst axial verschoben. Durch diese axiale Verschiebung des Kegels (14) gegenüber dem Hohlkegel (15) erfolgt die Veränderung des Durchflussquerschnittes im Ringraum (16) zum zwecke der Voreinstellung der Durchflussmenge.

Der Betätigungsring (6) ist zur Arretierung der Voreinstellposition axial verschiebbar. Die axiale Höhe (34) des Betätigungsringes (6) ist dabei so gewählt, dass bei auf das Heizkörperventil (26) aufgeschraubtem, in der Fig. 4 nicht dargestellten Thermostatkopf die Verstellung der voreingestellten Durchflussmenge nicht möglich ist. Der in der Fig. 4 nicht dargestellte Thermostatkopf wird in der Fig. 4 oben auf das Heizkörperventil (26) aufgeschraubt.

In der Fig. 5 sind gleiche oder gleich wirkende Einrichtungsteile wie in den Fig. 2 bis 4 mit denselben Bezugszeichen dargestellt. Hier wird nun am Beispiel der Abdichtung des Hohlkegels (15) gegenüber dem Topf (7) die Labyrinthdichtung (17) näher erläutert. Der Aufbau der Labyrinthdichtung (17) mit drei Dichtringen (18) und den umlaufenden Vorsprüngen (19) entspricht dem Aufbau der Labyrinthdichtung (17) gemäß Fig. 3. Hier ist darüber hinaus einer der Dichtringe (18), nämlich der in der Fig. 5 obere Dichtring einstückig mit dem Hohlkegel (15) ausgebildet. Dies vereinfacht die Konstruktion und reduziert die Herstellkosten. Die übrigen Merkmale der Labyrinthdichtung (17) entsprechen der in Fig. 3 dargestellten Lösung.

Weiterhin ist in der Fig. 5 der Ringraum (16) zwischen dem Kegel (14) und dem Hohlkegel (15) sehr deutlich erkennbar. Es wird deutlich, dass der Hohlkegel (15) eine nicht lineare Öffnung (20) in axialer Richtung aufweist. Damit ändert sich auch der Durchflussquerschnitt des Ringraumes (16) bei axialer Verlagerung des Hohlkegels (15)gegenüber dem Kegel (14) nicht linear. Dies führt dazu, dass auch die Voreinstellung der gewünschten Durchflussmenge abhängig von der Axialposition des Hohlkegels (15) gegenüber dem Kegel (14) nicht linear erfolgen kann, so dass insbesondere bei geringen voreinstellbaren Durchflussmengen eine sehr gute Auflösung der Voreinstellung gewährleistet ist.

## Patentansprüche

1. Voreinstellbarer Durchflussmengenregler für Heizungsanlagen mit einem Gehäuse (1), welches einen Heizmediumzulaufstutzen (2), einen Heizmediumablaufstutzen (3) und einen Voreinstellstutzen (4) aufweist, mit einem Mengenreguliereinsatz (5), welcher abhängig vom Druck im Mengenreguliereinsatz (5) den Durchflussquerschnitt für das Heizmedium verändert, mit einer außen am Gehäuse angebrachten Handhabe (6) zur Voreinstellung der Durchflussmenge, welche eine Axialposition von Teilen des Mengenreguliereinsatzes (5) verändert, wobei der Mengenreguliereinsatz (5) einen Topf (7) mit einem Topfboden (8) und einer Öffnung (9) im Topfboden (8) aufweist, wobei im Topf (7) axial verschieblich und durch eine Axialfeder (10) federbelastet eine Regelhülse (11) angeordnet ist, welche zulaufstutzenseitig mit einem Regulierstopfen (12) im Sinne einer Veränderung des Durchflussquerschnittes zusammenwirkt, der Ausnehmungen (13) aufweist, **dadurch gekennzeichnet, dass** der Mengenreguliereinsatz (5) ablaufstutzenseitig einen Kegel (14) aufweist, der mit einem Hohlkegel (15) zusammenwirkt, wobei der Kegel (14) und der Hohlkegel (15) einen Ringraum (16) für das ablaufende Heizmedium bilden, dass der Hohlkegel (15) mit der Regelhülse (11) verbunden ist und dass der Kegel (14) die Öffnung des Topfbodens (8) durchdringt.

2. Voreinstellbarer Durchflussmengenregler nach Anspruch 1, **dadurch gekennzeichnet, dass** zwischen dem Topf (7) und der Regelhülse (11) mindestens eine Labyrinthdichtung (17) angeordnet ist.

3. Voreinstellbarer Durchflussmengenregler nach Anspruch 2, **dadurch gekennzeichnet, dass** zwischen dem Topf (7) und der Regelhülse (11) zwei Labyrinthdichtungen (17) angeordnet sind, wobei eine Labyrinthdichtung (17) am Außenumfang des Hohlkegels (15) befestigt ist und die andere Labyrinthdichtung am Innenumfang des Regulierstopfens (12) befestigt ist.

4. Voreinstellbarer Durchflussmengenregler nach Anspruch 2, **dadurch gekennzeichnet, dass** die Labyrinthdichtung (17) aus mindestens zwei Dichtringen (18) besteht, deren Dimensionierung so gewählt ist, dass sich jeweils ein geringer Spalt zwischen Dichtring (18) und Dichtfläche ergibt.

5. Voreinstellbarer Durchflussmengenregler nach Anspruch 4, **dadurch gekennzeichnet, dass** die Labyrinthdichtung (17) aus drei Dichtringen (18) besteht.

6. Voreinstellbarer Durchflussmengenregler nach Anspruch 4, **dadurch gekennzeichnet, dass** die Dichtringe (18) aus Polytetrafluorethylen (PTFE) bestehen.

7. Voreinstellbarer Durchflussmengenregler nach Anspruch 4, **dadurch gekennzeichnet, dass** die Dichtringe (18) dichtflächenseitig einen umlaufenden Vorsprung (19) mit im wesentlichen halbrunden Querschnitt aufweisen.

8. Voreinstellbarer Durchflussmengenregler nach Anspruch 1, **dadurch gekennzeichnet, dass** die Regelhülse (11) und/oder der Topf (7) aus Edelstahl, insbesondere aus VA 1.4303 bestehen.

9. Voreinstellbarer Durchflussmengenregler nach Anspruch 1, **dadurch gekennzeichnet, dass** die Regelhülse (11) und/oder der Topf (7) eine gleitfähigkeitserhöhende Beschichtung insbesondere aus Teflon (Tetrafluorethylen) aufweisen.

10. Voreinstellbarer Durchflussmengenregler nach Anspruch 1, **dadurch gekennzeichnet, dass** der Hohlkegel (15) in Axialrichtung eine nicht lineare Öffnung (20) aufweist, um eine nicht lineare Voreinstellkennlinie zu erzeugen.

11. Voreinstellbarer Durchflussmengenregler nach Anspruch 1, **dadurch gekennzeichnet, dass** die Ausnehmungen (13) des Regulierstopfens (12) in Axialrichtung eine parabelförmige Öffnung zur Linearisierung der Regelkennlinie aufweisen.

12. Voreinstellbarer Durchflussmengenregler nach Anspruch 1, **dadurch gekennzeichnet, dass** der Durchflussmengenregler Teil eines vorlaufseitigen Heizkreisverteilers (21) für Fußbodenheizungen ist, dass der Regulierstopfen (12) an einer in einem Oberteil (22) gelagerten Spindel (23) befestigt ist, deren axiale Lage durch Verdrehen einer Handradkappe (6) veränderlich ist und das der Kegel (14) ortsfest im Heizmediumablaufstutzen (3) angeordnet ist.

13. Voreinstellbarer Durchflussmengenregler nach Anspruch 12, **dadurch gekennzeichnet, dass** das Gehäuse (1) eine Drehstellungsanzeige (24) für die Handradkappe (6) aufweist.

14. Voreinstellbarer Durchflussmengenregler nach Anspruch 12, **dadurch gekennzeichnet, dass** die Handradkappe (6) einen axial verschieblichen Blockierring (25) aufweist.

15. Voreinstellbarer Durchflussmengenregler nach Anspruch 1, **dadurch gekennzeichnet, dass** der Durchflussmengenregler Teil eines Heizkörperventiles (26) ist, dessen Ventilkörper (27) mit einem Ventilsitz (28) zusammenwirkt, der als Bohrung (29) eines Trägers (30) für den Kegel (14) ausgebildet ist.

16. Voreinstellbarer Durchflussmengenregler nach Anspruch 15, **dadurch gekennzeichnet, dass** die Voreinstellung der Durchflussmenge durch einen Betätigungsring (6) am Ventilanschlussstutzen (4) erfolgt, welche über eine Gewindehülse (31) einen mit einem Gewinde (32) versehenen Regelventileinsatz (33) axial verschiebt, wobei der Regelventileinsatz (33) den Ventilsitz (28) gemeinsam mit dem Träger (30) für den Kegel (14) trägt und dass der Topf (7) axial ortsfest mit der Gewindehülse (31) verbunden ist.

17. Voreinstellbarer Durchflussmengenregler nach Anspruch 15, **dadurch gekennzeichnet, dass** der Betätigungsring (6) axial verschieblich zur Blockierung der Drehung ausgebildet ist.

18. Voreinstellbarer Durchflussmengenregler nach Anspruch 17, **dadurch gekennzeichnet, dass** die axiale Höhe (34) des Betätigungsringes (6) so bemessen ist, das der Betätigungsring (6) bei montiertem Thermostatkopf blockiert ist.

## Claims

1. Presettable flow regulator for heating systems with a housing (1) which features a heating medium inlet socket (2), a heating medium outlet socket (3) and a presetting socket (4), with a volume regulating insert (5) which changes the flow cross section for the heating medium dependent on the pressure in the volume regulating insert (5), with a handle (6) attached to the outside of the housing for presetting the flow rate that changes the axial position of parts of the volume regulating insert (5), whereby the volume regulating insert (5) features a cup (7) with a cup base (8) and an opening (9) in the cup base (8), whereby a control sleeve (11), which is spring-loaded by an axial spring (10) and arranged in the cup (7) such that it can shift axially, interacts with a regulating plug (12) on the inlet socket side to change the flow cross section which exhibits recesses (13), characterised such that the volume regulating insert (5) has a cone (14) on the outlet socket side that interacts with a hollow cone (15) such that the cone (14) and the hollow cone (15) form an annulus (16) for the out-flowing heating medium, that the hollow cone (15) is connected to a control sleeve (11) and that the cone (14) penetrates through the opening in the cup base (8).

2. Presettable flow regulator in accordance with Claim 1, characterised such that at least one labyrinth seal (17) is arranged between the cup (7) and the control sleeve (11).

3. Presettable flow regulator in accordance with Claim 2, characterised such that two labyrinth seals (17) are arranged between the cup (7) and the control sleeve (11), whereby one labyrinth seal (17) is secured to the outer circumference of the hollow cone (15) and the other labyrinth seal is secured to the inner circumference of the regulating plug (12).

4. Presettable flow regulator in accordance with Claim 2, characterised such that the labyrinth seal (17) consists of at least two seals (18) with their dimensions selected such that a slight gap is created between the seal (18) and sealing surface.

5. Presettable flow regulator in accordance with Claim 4, characterised such that the labyrinth seal (17) consists of three seals (18).

6. Presettable flow regulator in accordance with Claim 4, characterised such that the seals (18) are made from polytetrafluoroethylene (PTFE).

7. Presettable flow regulator in accordance with Claim 4, characterised such that the seals (18) exhibit an all-round protrusion (19) with an essentially semicircular cross section on the sealing surface side.

8. Presettable flow regulator in accordance with Claim 1, characterised such that the control sleeve (11) and/or the cup (7) are made from stainless steel, in particular VA 1.4303.

9. Presettable flow regulator in accordance with Claim 1, characterised such that the control sleeve (11) and/or the cup (7) have a slide-enhancing coating, in particular Teflon (tetrafluoroethylene).

10. Presettable flow regulator in accordance with Claim 1, characterised such that the hollow cone (15) has a non-linear opening (20) in axial direction in order to create a non-linear presetting characteristic.

11. Presettable flow regulator in accordance with Claim 1, characterised such that the recesses (13) in the regulating plug (12) have a parabolic opening in axial direction in order to linearise the control characteristic.

12. Presettable flow regulator in accordance with Claim 1, characterised such that the flow regulator is part of a heating circuit manifold (21) on the inlet side of underfloor heating systems, that the regulating plug (12) is secured to a spindle (23) mounted in an insert (22) such that its axial position can be changed by turning a handwheel cap (6) and that the cone (14) is fixed in the heating medium outlet socket (3).

13. Presettable flow regulator in accordance with Claim 12, characterised such that the housing (1) features a rotary position indicator (24) for the handwheel cap (6).

14. Presettable flow regulator in accordance with Claim 12, characterised such that the handwheel cap (6) is equipped with an axially-displaceable blocking ring (25).

15. Presettable flow regulator in accordance with Claim 1, characterised such that flow regulator is a part of a radiator valve (26), the valve body (27) of which interacts with a valve seat (28) which is designed as a hole (29) in a carrier (30) for the cone (14).

16. Presettable flow regulator in accordance with Claim 15, characterised such that the flow is preset by an actuating ring (6) on the valve connection socket (4) which axially shifts a control valve insert (33) with a thread (32) by means of a threaded sleeve (31), whereby the control valve insert (33) supports the valve seat (28) together with the carrier (30) for the cone (14) and that the cup (7) is axially fixed to the threaded sleeve (31) .

17. Presettable flow regulator in accordance with Claim 15, characterised such that the actuating ring (6) is designed such that it can be displaced axially to block rotation.

18. Presettable flow regulator in accordance with Claim 17, characterised such that the axial height (34) of the actuating ring (6) is dimensioned such that the actuating ring (6) is blocked when the thermostatic head is mounted in position.

## Revendications

1. Régulateur de débit préréglable pour installations de chauffage comprenant : un boîtier (1) muni d'une tubulure d'arrivée du fluide caloporteur (2), d'une tubulure d'évacuation du fluide caloporteur (3) et d'une tubulure de préréglage (4); un élément de contrôle du débit (5), qui en fonction de la pression interne dans l'élément de contrôle du débit (5) modifie la section de passage du fluide caloporteur; une bague de réglage (6) installée à l'extérieur du boîtier pour le préréglage du débit qui modifie la position axiale de pièces de l'élément de contrôle du débit (5), cet élément (5) étant muni d'un réceptacle (7) avec un fond (8) et une ouverture (9) dans le fond du réceptacle (8), un manchon de réglage (11) mobile axialement et à ressort de rappel axial (10) se trouvant dans le réceptacle (7), et interagissant du côté de la tubulure d'arrivée avec un bouchon de réglage (12) permettant de modifier la section de passage qui présente des évidements (13), **caractérisé par le fait que** l'élément de contrôle du débit (5) est muni d'un cône (14) du côté de la tubulure d'évacuation qui interagit avec un cône creux (15), le cône (14) et le cône creux (15) formant un espace annulaire (16) pour l'écoulement du fluide caloporteur, et que le cône creux (15) est relié au manchon de réglage (11) et que le cône (14) pénètre par l'ouverture du fond du réceptacle (8).

2. Régulateur de débit préréglable selon la revendication 1, **caractérisé par le fait qu'**au moins un joint labyrinthe (17) se trouve entre le réceptacle (7) et le manchon de réglage (11).

3. Régulateur de débit préréglable selon la revendication 2, **caractérisé par le fait que** deux joints labyrinthes (17) se trouvent entre le réceptacle (7) et le manchon de réglage (11), un joint labyrinthe (17) étant fixé sur la périphérie extérieure du cône creux (15) et l'autre sur la périphérie intérieure du bouchon de réglage (12).

4. Régulateur de débit préréglable selon la revendication 2, **caractérisé par le fait que** le joint labyrinthe (17) consiste en au moins deux bagues d'étanchéité (18) dont le dimensionnement est tel que l'espace entre la bague d'étanchéité (18) et la surface d'étanchéité soit réduit.

5. Régulateur de débit préréglable selon la revendication 4, **caractérisé par le fait que** le joint labyrinthe (17) consiste en trois bagues d'étanchéité (18).

6. Régulateur de débit préréglable selon la revendication 4, **caractérisé par le fait que** les bagues d'étanchéité (18) sont en polytétrafluoréthylène (PTFE).

7. Régulateur de débit préréglable selon la revendication 4, **caractérisé par le fait que** les bagues d'étanchéité (18) présentent une saillie périphérique (19) de section semi-circulaire.

8. Régulateur de débit préréglable selon la revendication 1, **caractérisé par le fait que** le manchon de réglage (11) ou le réceptacle (7) sont en acier, en particulier en VA 1.4303.

9. Régulateur de débit préréglable selon la revendication 1, **caractérisé par le fait que** le manchon de réglage (11) ou le réceptacle (7) sont dotés d'un revêtement améliorant le glissement en particulier en Téflon (polytétrafluoréthylène).

10. Régulateur de débit préréglable selon la revendication 1, **caractérisé par le fait que** le cône creux (15) présente une ouverture non linéaire (20) dans la direction axiale pour créer une courbe caractéristique de préréglage non linéaire.

11. Régulateur de débit préréglable selon la revendication 1, **caractérisé par le fait que** les évidements (13) du bouchon de réglage (12) présentent une ouverture de forme parabolique dans la direction axiale pour linéariser la courbe caractéristique de réglage.

12. Régulateur de débit préréglable selon la revendication 1, **caractérisé par le fait que** le régulateur de débit fait partie d'un collecteur de circuit de chauffage (21) en amont pour les chauffages par le sol, que le bouchon de réglage (12) est fixé à une tige (23) logée dans la partie supérieure (22) dont la position axiale est variable par rotation de la protection de la bague de réglage (6) et que le cône (14) est fixé dans la tubulure d'évacuation du fluide caloporteur (3).

13. Régulateur de débit préréglable selon la revendication 12, **caractérisé par le fait que** le boîtier (1) est muni d'un indicateur de position de rotation (24) de la protection de la bague de réglage (6).

14. Régulateur de débit préréglable selon la revendication 12, **caractérisé par le fait que** la protection de la bague de réglage (6) est munie d'une bague de blocage (25) mobile axialement.

15. Régulateur de débit préréglable selon la revendication 1, **caractérisé par le fait que** le régulateur de débit fait partie d'un robinet thermostatique (26) dont le corps de soupape (27) interagit avec un siège de soupape (28) qui forme l'alésage (29) d'un support (30) pour le cône (14).

16. Régulateur de débit préréglable selon la revendication 15, **caractérisé par le fait que** le préréglage du débit est réalisé par une bague de commande (6) sur le raccord de la soupape (4) qui déplace axialement par un manchon fileté (31) un élément de soupape de réglage (33) pourvu d'un filetage (32), l'élément de réglage (33) portant le siège de soupape (28) avec le support (30) du cône (14), et que le réceptacle (7) est relié axialement au manchon fileté (31).

17. Régulateur de débit préréglable selon la revendication 15, **caractérisé par le fait que** la bague de commande (6) est mobile axialement pour bloquer la rotation.

18. Régulateur de débit préréglable selon la revendication 17, **caractérisé par le fait que** la hauteur axiale (34) de la bague de commande (6) est mesurée de sorte que la bague de commande (6) soit bloquée si la tête thermostatique est installée.
